# EUROPÄISCHE PATENTSCHRIFT

(11) **EP 1 273 496 B1**
(45) Veröffentlichungstag und Bekanntmachung des Hinweises auf die Patenterteilung: **16.11.2005**
(21) Anmeldenummer: 02012147.1
(22) Anmeldetag: 01.06.2002
(51) Int. Cl.: B60T 8/00

(54) **Verfahren zur Fahrbahnklassifizierung**
Method for road surface classification
Procédé de classification de chaussée

(30) Priorität: 07.07.2001 DE 10133117
(43) Veröffentlichungstag der Anmeldung: 08.01.2003
(73) Patentinhaber: DaimlerChrysler AG, 70567 Stuttgart (DE)
(72) Erfinder: Gnadler, Rolf, Prof. Dr., 75217 Birkenfeld (DE); Marwitz, Hartmut, Dr., 73728 Esslingen (DE); Unrau, Hans-Joachim, 76227 Karlsruhe (DE)

(56) Entgegenhaltungen:
- EP-A- 0 556 070
- DE-C- 4 329 745
- US-A- 4 770 438
- US-A- 5 723 768

## Beschreibung

Die Erfindung betrifft ein Verfahren zur Fahrbahnklassifizierung in einem Fahrzeug, wobei eine Auswertung anhand der dynamischen Anteile von Kräften oberhalb einer vorbestimmten Grenzfrequenz erfolgt und mittels der Auswertung eine Unterscheidung zwischen Fahrbahntypen und/oder Fahrbahnzuständen getroffen wird.

Die europäische Offenlegungsschrift EP 0556070 A2 offenbart ein Verfahren zur Fahrbahnklassifizierung sowie eine entsprechende Vorrichtung, mit deren Hilfe Stoßdämpfer abhängig von der Fahrbahnklassifizierung eingestellt werden können. Zu diesem Zweck wird die Bewegung des Chassis eines Fahrzeugs ermittelt, was gemäß einer Ausführungsform des vorgeschlagenen Verfahrens beispielsweise durch eine Messung der Relativbewegung zwischen Chassis und Rad oder auch über einen Beschleunigungssensor am Chassis erfolgen kann. Die ermittelte Bewegung wird in Blöcke verschiedener Frequenzen unterteilt und abhängig von der jeweiligen Intensität auf die Art der Fahrbahn geschlossen.

Die US-Patentschrift 4,770,438 beschreibt ein System zur Einstellung der Stoßdämpfer, welches auf einem Erfassen der Bewegung des Chassis basiert. Die Bewegung des Chassis wird über Sensoren erfasst, wobei ein Ultraschallsensor am Chassis des Fahrzeugs sowie Drucksensoren im Stoßdämpfer vorgeschlagen sind. Die von den Sensoren gelieferten Signale werden gefiltert, um einen hochfrequenten und ein niederfrequenten Anteil voneinander zu trennen. Auf Basis des niederfrequenten Anteils werden die Stoßdämpfer eingestellt.

In der deutschen Patentschrift DE 196 08 064 C2 ist ein Verfahren zur Ermittlung der Bodenhaftung von Laufrädern bei nicht trockener Fahrbahnoberfläche beschrieben, bei dem Weg-oder Beschleunigungssensoren verwendet werden, um eine Auslenkung oder eine Beschleunigung eines Radträgers in Fahrzeuglängs- und Fahrzeughochrichtung zu bestimmen. Aus den ermittelten Werten wird eine in Längsrichtung auf das Fahrzeugrad wirkende Schwallkraft F_{S} ermittelt. Die Messergebnisse werden zur Bestimmung des Gleichanteils oder der im stationären Zustand vorliegenden Schwallkraft benutzt, mittels der dann eine Wasserfilmdicke sowie eine Geschwindigkeit ermittelt wird, ab der mit einem Verlust der Bodenhaftung gerechnet werden muss. Eine Aussage über die Art der Fahrbahnoberfläche ist mit dem beschriebenen Verfahren nicht möglich.

In der deutschen Offenlegungsschrift DE 198 55 332 A1 ist ein Schrankenverfahren beschrieben, mittels dem unter Heranziehung der Messergebnisse von verschiedenen Sensoren ein zu ermittelnder Fahrbahnzustand eingegrenzt werden kann. Hierzu werden die von den Sensoren ermittelten Parameter daraufhin geprüft, ob bei den vorliegenden Parameterwerten bestimmte Fahrbahnzustände bereits von vornherein ausgeschlossen sind. Beispielsweise kann bei sehr tiefen Temperaturen kein Wasserfilm auf der Fahrbahn vorliegen. Mittels des Schrankenverfahrens kann ein zu ermittelnder Fahrbahnzustand durch mehrere, für sich gesehen relativ unsichere Bestimmungen sehr genau eingegrenzt werden.

Aus der deutschen Patentschrift DE 41 15 367 C2 ist ein Antiaquaplaningsystem für Kraftfahrzeuge bekannt, bei dem das Schwingungsverhalten des Fahrwerks über Sensoren erfasst wird. Hierzu sind beispielsweise akustische Sensoren an einer Achse befestigt, die durch Eigenschwingungen der Achse verursachten Körperschall erfassen. Bei Aquaplaning ändern sich gegenüber trockener und nasser Strasse die Eigenschwingungen der Achse, wodurch ein Aquaplaningzustand festgestellt werden kann.

Mit der Erfindung soll ein zuverlässiges Verfahren zur Fahrbahnklassifizierung geschaffen werden.

Erfindungsgemäß ist hierzu ein Verfahren zur Fahrbahnklassifizierung in einem Fahrzeug vorgesehen, bei dem eine Auswertung anhand der dynamischen Anteile von Kräften oberhalb einer vorbestimmten Grenzfrequenz erfolgt und bei dem mittels der Auswertung eine Unterscheidung zwischen Fahrbahntypen und/oder Fahrbahnzuständen getroffen wird, wobei die auf ein Fahrzeugrad wirkenden Kräfte bestimmt werden und die Auswertung anhand der dynamischen Anteile der auf das Fahrzeugrad wirkenden Kräfte erfolgt, wobei die auf das Fahrzeugrad wirkenden Kräfte mittels Sensoren an einem Radträger des Fahrzeugrades ermittelt werden.

Das erfindungsgemäße Verfahren nutzt die Tatsache aus, dass unterschiedliche Arten von Fahrbahnoberflächen sowie unterschiedliche Fahrbahnzustände, unterschiedliche charakteristische Höhenprofile und Nachgiebigkeiten aufweisen. Dies führt wiederum zu unterschiedlichen dynamischen Bewegungen des Rads und unterschiedlichen am Rad angreifenden Kräften. Durch Messen und Auswerten dieser Kräfte ist es möglich, anhand charakteristischer Frequenzanteile, beispielsweise oberhalb 1Hz, zu erkennen, ob eine befestigte oder unbefestigte Fahrbahn vorliegt. Neben unterschiedlichen Fahrbahntypen, beispielsweise unbefestigt oder Asphalt, kann auch zwischen unterschiedlichen Fahrbahnzuständen, beispielsweise trocken, nass, Aquaplaninggefahr, unterschieden werden. Zur Messwerterfassung können Weg-, Beschleunigungs- und Kraftsensoren verwendet werden. Sinnvoll ist die Erfassung von Bewegungen und Kräften in Hoch-, Quer- und Längsrichtung des Fahrzeugs. Durch Berücksichtigung charakteristischer Messergebnisse, beispielsweise bestimmte Frequenzanteile, kann eine zuverlässige Aussage über die Art und den Zustand der Fahrbahn getroffen werden. Eine weitere Verbesserung ist durch ein sogenanntes Schrankenverfahren möglich, bei dem die Signale weiterer Sensoren, beispielsweise Temperatursensoren, hinzugezogen werden und aufgrund der Signale dieser weiteren Sensoren bestimmte Fahrbahnzustände ausgeschlossen werden.

In Weiterbildung der Erfindung ist vorgesehen, dass eine Unterscheidung wenigstens zwischen den Fahrbahntypen, befestigt, unbefestigt und Kopfsteinpflaster, getroffen wird.

Eine solche Unterscheidung liefert bereits wichtige Aussagen über den vorliegenden Fahrbahntyp, was beispielsweise für die Abschätzung einer Haftungsgrenze der Reifen von großer Bedeutung ist. Ein solches Verfahren kann mittels relativ einfacher Auswertealgorithmen realisiert werden, da sich die dynamischen Anteile der Bewegungen des Fahrzeugrads und/oder der auf das Fahrzeugrad wirkenden Kräfte bei diesen Fahrbahntypen besonders stark unterscheiden. Weitere Unterscheidungen können beispielsweise zwischen den Fahrbahntypen, Schotter, Sand, Asphalt und Beton getroffen werden.

In Weiterbildung der Erfindung ist vorgesehen, dass ein stochastischer Anteil der auf das Fahrzeugrad wirkenden Kräfte bestimmt wird und dann, wenn der stochastische Anteil unterhalb eines vorbestimmten Grenzwerts liegt, ein Fahrbahnzustand Aquaplaninggefahr erkannt wird.

Bei Vorliegen von Aquaplaning schwimmt das betreffende Rad auf und hat folglich keinen Kontakt mehr zur festen Fahrbahnoberfläche. In diesem Fall sind in den Messsignalen keine stochastischen Anregungen durch die Fahrbahnoberfläche mehr festzustellen. Auf diese Weise kann ein Aquaplaningzustand sicher und frühzeitig festgestellt werden.

In Weiterbildung der Erfindung ist vorgesehen, dass ein harmonischer Anteil der auf das Fahrzeugrad wirkenden Kräfte bestimmt wird und dann, wenn der harmonische Anteil oberhalb eines vorbestimmten Grenzwerts liegt, ein Fahrbahnzustand Aquaplaninggefahr erkannt wird. Alternativ wird ein Aquaplaningzustand dann erkannt, wenn der harmonische Anteil um einen vorbestimmten Faktor über dem stochastischen Anteil liegt.

Im Aquaplaningzustand trennt ein Wasserfilm Fahrbahn und Reifen vollständig. In den Messdaten sind dadurch im wesentlichen Anregungen mit der Drehfrequenz des Rads, beispielsweise durch Unwuchten, zu erkennen, da die normalerweise überlagerten stochastischen Anregungen fehlen. Das Erkennen eines A-quaplaningzustands ist dadurch sicher und mit vergleichsweise geringem Aufwand möglich.

Die Erfindung betrifft auch eine Vorrichtung zur Durchführung des Verfahrens zur Fahrbahnklassifizierung, bei der zum Erfassen auf wenigstens ein Fahrzeugrad im Fahrzeuglängs-, Fahrzeugquer- und/oder Fahrzeughochrichtung wirkender Kräfte auf einem jeweiligen Radträger angeordnete piezoelektrische Sensoren vorgesehen sind.

Piezoelektrische Sensoren sind vergleichsweise preiswert, da sie in großer Stückzahl produziert werden. Da lediglich die dynamischen Beschleunigungsanteile oberhalb von ca. 1Hz von Interesse sind, können piezoelektrische Aufnehmer verwendet werden, die für statische Messungen ungeeignet wären. Im dynamischen Bereich weisen piezoelektrische Sensoren Vorteile auf, beispielsweise eine hohe Grenzfrequenz. Verwendet werden können Beschleunigungssensoren, Wegsensoren und/oder Kraftsensoren.

Weitere Merkmale und Vorteile der Erfindung ergeben sich aus den Ansprüchen und der folgenden Beschreibung im Zusammenhang mit den Zeichnungen. In den Zeichnungen zeigen:
- Fig. 1: eine schematische Darstellung eines auf einer Fahrbahn abrollenden Fahrzeugrads, und
- Fig. 2: eine bevorzugte Ausführungsform der erfindungsgemäßen Vorrichtung zur Durchführung des erfindungsgemäßen Verfahrens.

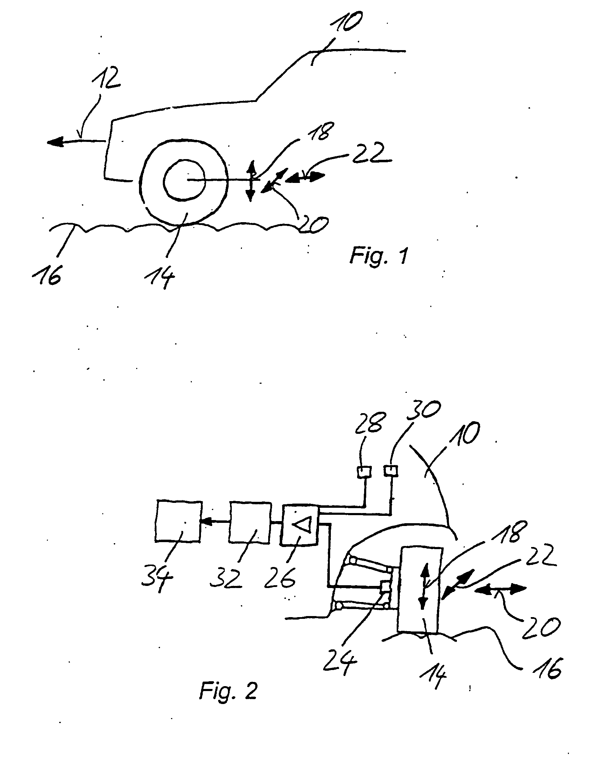

In der schematischen Darstellung der Fig. 1 ist ein Fahrzeug 10 zu erkennen, das sich in Richtung des Pfeiles 12 vorwärts bewegt. Ein Rad 14 des Fahrzeugs 10 rollt auf einer Fahrbahnoberfläche 16 ab. Wie bei jeder realen Fahrbahn ist die Fahrbahnoberfläche 16 uneben, so dass das gegenüber dem Fahrzeug 10 gefederte Rad 14 translatorische Bewegungen ausführt. Infolge der Unebenheit der Fahrbahnoberfläche 16 führt das Rad 14 translatorische Bewegungen in einer Fahrzeughochrichtung, die durch einen Doppelpfeil 18 angedeutet ist, in einer Fahrzeugquerrichtung, angedeutet durch einen Doppelpfeil 20, sowie in einer Fahrzeuglängsrichtung aus, die durch einen Doppelpfeil 22 angedeutet ist.

Jeder Fahrbahntyp, beispielsweise Asphalt, Beton, Schotter, Sand oder Kopfsteinpflaster, weist eine unterschiedliche Unebenheit der Fahrbahnoberfläche auf. Darüber hinaus ist auch die Nachgiebigkeit des Materials der Fahrbahnoberfläche unterschiedlich. Infolgedessen führt das Rad 14 je nach Typ der Fahrbahn, über die es abrollt, unterschiedliche charakteristische translatorische Bewegungen in den Richtungen der Doppelpfeile 18, 20 und 22 aus. Indem die translatorischen Bewegungen des Rads 14 gemessen und ausgewertet werden, können charakteristische Frequenzanteile der translatorischen Bewegungen bestimmt werden. Anhand eines Vergleichs mit abgespeicherten Kennlinien für unterschiedliche Fahrbahntypen oder einer Auswertung anhand von abgespeicherten Grenzwerten für Frequenzanteile bei verschiedenen Fahrbahntypen kann der Typ der Fahrbahn, über den das Rad 14 gerade rollt, bestimmt werden.

Neben dem Fahrbahntyp kann durch das erfindungsgemäße Verfahren auch der Zustand der Fahrbahn, über die das Rad 14 gerade rollt, bestimmt werden. Beispielsweise verändert ein Wasserfilm auf einer Fahrbahnoberfläche die translatorischen Bewegungen des über die Fahrbahn abrollenden Rads 14 in charakteristischer Weise. Gleiches gilt beispielsweise für eine Eisschicht oder eine mit Schnee bedeckte Fahrbahn. Sowohl der Fahrbahntyp, beispielsweise befestigt oder unbefestigt, sowie der Fahrbahnzustand, beispielsweise trocken oder nass, sind für die Beurteilung einer Kraftschlussgrenze eines Reifens des Rads 14 von großer Bedeutung, so dass erst eine verlässliche Aussage über Fahrbahntyp und Fahrbahnzustand eine Abschätzung des Gefährdungspotentials bei einer aktuellen Geschwindigkeit des Fahrzeugs 10 ermöglicht. Neben der Erfassung der translatorischen Bewegungen des Rads 14 können auch auf das Rad 14 wirkende Kräfte oder Beschleunigungen erfasst werden, um Fahrbahntyp und Fahrbahnzustand zu bestimmen.

Eine bevorzugte Ausführungsform der erfindungsgemäßen Vorrichtung zur Durchführung des Verfahrens zur Fahrbahnklassifizierung ist schematisch in der Fig. 2 dargestellt. An einem Radträger des gegenüber dem Fahrzeug 10 gefederten Rads 14 ist ein Beschleunigungssensor 24 angeordnet, der Beschleunigungen des Rads 14 in den Richtungen der Doppelpfeile 18, 20 und 22 erfasst. Die vom Beschleunigungssensor 24 ausgegebenen Signale werden an einen Messverstärker 26 weitergeleitet. An den Messverstärker 26 werden auch die Signale eines Temperatursensors 28 und eines Feuchtesensors 30 weitergeleitet.

Nach Verstärkung der Signale im Messverstärker 26 gelangen die aufbereiteten Signale zu einem Bordrechner 32, der die dynamischen Anteile der Signale, die oberhalb von 1Hz liegen, auswertet und Fahrbahntyp und Fahrbahnzustand ermittelt. Hierzu führt der Bordrechner 32 eine Frequenzanalyse der Signale von dem Beschleunigungssensor 24 getrennt nach den Richtungen 18, 20 und 22 durch. Anhand eines Vergleichs mit abgespeicherten charakteristischen Kennlinien und/oder Grenzwerten werden möglicherweise vorliegende Fahrbahntypen und Fahrbahnzustände ermittelt.

Eine weitere Eingrenzung erfolgt mittels eines in dem Bordrechner 32 durchgeführten Schrankenverfahrens. Hierzu wird überprüft, ob die von dem Temperatursensor 28 und dem Feuchtesensor 30 ermittelten Temperatur- bzw. Feuchtewerte mit dem bestimmten Fahrbahnzustand vereinbar sind. Beispielsweise ist bei Temperaturen von deutlich über 0°C ein Fahrbahnzustand vereist ausgeschlossen und bei niedrigen Feuchtewerten kommt ein Fahrbahnzustand nass nicht in Betracht.

Nachdem im Bordrechner 32 der aktuelle Fahrbahntyp und der aktuelle Fahrbahnzustand ermittelt wurden, können die Ergebnisse an weitere elektronische Systeme 34 weitergegeben werden. Solche Systeme können beispielsweise eine einfache Anzeigeeinheit für den Fahrer, aber auch Einheiten zur Bestimmung einer Kraftschlussgrenze des Rads 14 auf der Fahrbahnoberfläche 16 sein.

## Patentansprüche

1. Verfahren zur Fahrbahnklassifizierung in einem Fahrzeug, wobei eine Auswertung anhand der dynamischen Anteile von Kräften oberhalb einer vorbestimmten Grenzfrequenz erfolgt und mittels der Auswertung eine Unterscheidung zwischen Fahrbahntypen und/oder Fahrbahnzuständen getroffen wird,
**dadurch gekennzeichnet, dass** auf ein Fahrzeugrad (14) wirkende Kräfte bestimmt werden und die Auswertung anhand der dynamischen Anteile der auf das Fahrzeugrad wirkenden Kräftet erfolgt, wobei die auf das Fahrzeugrad wirkenden Kräfte mittels Sensoren an einem Radträger des Fahrzeugrades (14) ermittelt werden.

2. Verfahren nach Anspruch 1,
**dadurch gekennzeichnet, dass** eine Unterscheidung wenigstens zwischen den Fahrbahntypen befestigt, unbefestigt und Kopfsteinpflaster getroffen wird.

3. Verfahren nach Anspruch 1 oder 2,
**dadurch gekennzeichnet, dass** ein stochastischer Anteil der auf das Fahrzeugrad (14) wirkenden Kräfte bestimmt und dann, wenn der stochastische Anteil unterhalb eines vorbestimmten Grenzwerts liegt, ein Fahrbahnzustand Aquaplaninggefahr erkannt wird.

4. Verfahren nach einem der vorstehenden Ansprüche,
**dadurch gekennzeichnet, dass** ein harmonischer Anteil der auf das Fahrzeugrad (14) wirkenden Kräfte bestimmt wird und dann, wenn der harmonische Anteil oberhalb eines vorbestimmten Grenzwerts liegt, ein Fahrbahnzustand Aquaplaninggefahr erkannt wird.

5. Verfahren nach Anspruch 1 oder 2,
**dadurch gekennzeichnet, dass** ein harmonischer und ein stochastischer Anteil der auf das Fahrzeugrad (14) wirkenden Kräfte bestimmt wird und dann, wenn der harmonische Anteil um einen vorbestimmten Faktor über dem stochastischen Anteil liegt, ein Fahrbahnzustand Aquaplaninggefahr erkannt wird.

6. Vorrichtung zur Durchführung des Verfahrens nach einem der vorstehenden Ansprüche,
**dadurch gekennzeichnet, dass** zum Erfassen auf wenigstens ein Fahrzeugrad (14) in Fahrzeuglängs-, Fahrzeugquer- und/oder Fahrzeughochrichtung wirkender Kräfte auf einem jeweiligen Radträger angeordnete piezoelektrische Sensoren (24) vorgesehen sind.

## Claims

1. Method for road classification in a vehicle, in which an evaluation takes place with reference to the dynamical fractions of forces above a predetermined limiting frequency and, by means of the said evaluation, a distinction is made between road types and/or road conditions,
**characterised in that**
forces acting on a vehicle wheel (14) are determined and the evaluation takes place with reference to the dynamical fractions of the forces acting on the vehicle wheel, the said forces acting on the vehicle wheel being determined by sensors on a wheel support of the said vehicle wheel (14).

2. Method according to Claim 1,
**characterised in that**
a distinction is made between at least the asphatted, unsurfaced and cobbled road types.

3. Method according to Claims 1 or 2,
**characterised in that**
a stochastic fraction of the forces acting on the vehicle wheel (14) is determined and then, if the said stochastic fraction is below a predetermined limiting value, a road condition corresponding to aquaplaning risk is recognised.

4. Method according to any of the preceding claims
**characterised in that**
a harmonic fraction of the forces acting on the vehicle wheel (14) is determined and then, if the said harmonic fraction is above a predetermined limiting value, a road condition corresponding to aquaplaning risk is recognised.

5. Method according to Claims 1 or 2,
**characterised in that**
a harmonic and a stochastic fraction of the forces acting on the vehicle wheel (14) are determined and then, if the harmonic fraction is larger than the stochastic fraction by a predetermined factor, a road condition corresponding to aquaplaning risk is recognised.

6. Device for implementing the method according to any of the preceding claims,
**characterised in that**
piezoelectric sensors (24) are provided on a respective wheel support to measure forces acting on at least one vehicle wheel (14) in the longitudinal, transverse and vertical directions of the vehicle.

## Revendications

1. Procédé de classification d'une chaussée dans un véhicule automobile, une analyse étant effectuée à l'appui des composantes dynamiques des forces au-dessus d'une fréquence limite prédéterminée et une distinction entre les types de chaussée et/ou les états de la chaussée étant établie à l'appui de l'analyse, **caractérisé en ce que** des forces exercées sur une roue (14) du véhicule sont déterminées et l'analyse est effectuée à l'appui des composantes dynamiques des forces exercées sur la roue du véhicule, les forces exercées sur la roue du véhicule étant déterminées par des capteurs montés sur un support de roue de la roue (14) du véhicule.

2. Procédé selon la revendication 1, **caractérisé en ce que** la distinction est établie au moins entre les types de chaussée : consolidée, non consolidée et pavée.

3. Procédé selon la revendication 1 ou 2, **caractérisé en ce qu'**une composante stochastique des forces exercées sur la roue (14) du véhicule est déterminée et si la composante stochastique se situe au-dessous d'une valeur limite prédéterminée, un état de chaussée avec risque d'aquaplaning est détecté.

4. Procédé selon l'une quelconque des revendications précédentes, **caractérisé en ce qu'**une composante harmonique des forces exercées sur la roue (14) du véhicule est déterminée et si la composante harmonique se situe au-dessus d'une valeur limite prédéterminée, un état de chaussée avec risque d'aquaplaning est détecté.

5. Procédé selon la revendication 1 ou 2, **caractérisé en ce qu'**une composante harmonique et une composante stochastique des forces exercées sur la roue (14) du véhicule sont déterminées et si la composante harmonique est supérieure à la composante stochastique selon un facteur prédéterminé, un état de chaussée avec risque d'aquaplaning est détecté.

6. Dispositif destiné à la mise en oeuvre du procédé selon l'une quelconque des revendications précédentes, **caractérisé en ce qu'**il est prévu des capteurs piézoélectriques (24), agencés sur un support de roue associé, en vue de détecter les forces exercées sur au moins une roue (14) du véhicule dans le sens longitudinal, transversal et/ou vertical du véhicule.
